# EUROPEAN PATENT APPLICATION

(11) **EP 1 604 584 A1**
(43) Date of publication of application: **14.12.2005**
(21) Application number: 05251237.3
(22) Date of filing: 02.03.2005
(51) Int. Cl.: A45D 31/00

(54) **Systems and methods for artificial nail**

(30) Priority: 08.06.2004 US 863562
(71) Applicant: KMC Exim Corp., Port Washington, New York 11050 (US)
(72) Inventor: Chang, Sung Yong, Roslyn Heights, New York 11050 (US)
(74) Representative: Samuels, Adrian James

(57) **Abstract**

Systems and methods for sizing and applying artificial nails (20). At least one characteristic of at least one artificial nail (20) may be selected using a plurality of nail sizing elements (10). Each of the nail sizing elements (10) may correspond to at least one characteristic of at least one artificial nail (20) for attachment to a bodily extension. The artificial nails (20) are preferably provided separate and apart from the nail sizing elements (10).

## Description

### CROSS-REFERENCE TO RELATED APPLICATIONS

This application relates to United States Patent Application No. 10/383,383, filed March 7, 2003, which is incorporated herein by reference in its entirety.

### FIELD OF THE INVENTION

The present invention relates to artificial nails. More particularly, the present invention relates to systems and methods for obtaining certain characteristics of artificial or natural nails, which are used for later applications of the artificial nails.

### BACKGROUND OF THE INVENTION

Artificial nails are generally used to enhance the cosmetic appearance of fingers and/or toes, and may also be used to replace missing or damaged natural nails. Typically, artificial nails can be used to obtain a desired nail length and/or shape when the natural nail is too weak to grow without breaking. The use of artificial nails may also be preferred since nail polish may better adhere to the artificial nail surface compared to the surface of a natural nail.

Artificial nails generally include (i) full-coverage nails, which may completely overlay the natural fingernail, and (ii) nail tips, which are positioned and attached to the end of the natural nail. Such nails are usually made from thin, molded plastic members manufactured in a general shape of a natural nail, and can preferably be further shaped with a file, after the attachment thereof to a finger or toe, to ensure proper blending and a comfortable fit. Typically, in order to attach the artificial nail, a bonding adhesive is applied to the artificial nail and/or the natural nail. The artificial nail is then positioned on the natural nail such that the front portion of the artificial nail extends over the natural nail to form an extended nail tip. The extended artificial nail tip may then be cut and/or filed to a desired length and shape. Any excess adhesive can then be wiped or trimmed away. After a waiting period, the adhesive sets, and the artificial nail is secured to the natural nail. To remove the artificial nail, the finger on which the artificial nail is secured is typically soaked in a solvent for a sufficient amount of time to dissolve the adhesive. Such soaking process is not only difficult and time consuming, but also may damage the natural nail. This is especially problematic if the characteristics of the artificial nail (*e.g.*, curvature, shape) does not match those of the natural nail.

Conventional artificial nails are substantially rectangular plastic members having a variety of lengths and widths. Typically, full coverage nails are applied professionally using an acrylic method. The acrylic method, however, has many drawbacks that include, for example, requiring time-consuming and labor intensive application by a trained technician at a professional salon, toxic chemicals are required creating many health concerns, and sculpting the acrylic nail may cause problems due to dusting increasing health concerns.

In addition, sculpting individual nails may result in inconsistent outcomes, even when applied by a trained professional. More specifically, typical artificial nails generally include a certain degree of curvature along the length and width to allow a more natural fit to the natural nail. The artificial nail, however, should typically be filed and buffed after being secured to the natural nail in order to obtain a desired fit and blending. Moreover, since the artificial nails usually do not exactly match the curvature of the natural nail, the artificial nails secured in such manner are often distorted, thus causing an increased stress on both the natural nail and the artificial nail. Thus, securing an improperly fitted artificial nail on a natural nail may cause certain discomfort to the wearer, as well as some difficulty in attaching and fitting the artificial nails. Accordingly, there is a need to be able to determine the best fitting artificial nails that match the characteristics of a natural nail.

### SUMMARY OF THE INVENTION

According to exemplary embodiments of the present invention, an artificial nail that matches the characteristics of a natural nail may be determined. For example, certain characteristics of the natural nail may be obtained, and an artificial nail may then be selected based on these characteristics to obtain a better fit between the artificial nail and the natural nail.

In certain exemplary embodiments of the present invention, a system for obtaining at least one characteristic of at least one artificial nail is provided. The system may include a plurality of nail sizing elements, such that each of the elements includes at least one characteristic. Such characteristic(s) of each of the nail sizing elements corresponds to at least one characteristic of an artificial nail that may be attached to a bodily extension (*e.g.*, a finger, a toe, a natural nail, etc.). In other exemplary embodiments of the present invention, a method can be provided for obtaining at least one characteristic of at least one artificial nail. The method may include providing a plurality of nail sizing elements, such that each of the elements includes at least one characteristic. Such characteristic(s) of each of the nail sizing elements corresponds to at least one characteristic of an artificial nail that may be attached to a bodily extension (*e.g.*, a finger, a toe, a natural nail, etc).

In a further embodiment of the present invention, the characteristic of the nail sizing element can substantially match one or more characteristics of the bodily extension. In a still further embodiment of the present invention, the artificial nail having one or more characteristics corresponding to the nail sizing element may be obtained from a plurality of artificial nails, and attached to a bodily extension. Such artificial nail may be provided separately from the nail sizing elements, and selected based on the characteristic(s) of the nail sizing element.

For a better understanding of the present invention, together with other and further objects, reference is made to the following description, taken in conjunction with the accompanying drawings, and its scope will be pointed out in the appended claims.

### BRIEF DESCRIPTION OF THE DRAWINGS

Figure 1 shows an exemplary embodiment of a set of nail sizing elements that may be used in accordance with the systems and methods of the present invention;

Figure 2 shows an exemplary artificial nail selected according to the exemplary scheme of these systems and methods of the present invention;

Figure 3 shows an exemplary system and usage thereof for obtaining one or more characteristics of natural nails and/or artificial nails according to the systems and methods of the present invention.

### DESCRIPTION OF THE INVENTION

The present invention provides exemplary systems and methods for sizing and/or applying artificial nails 20. While the exemplary systems and methods of the present invention may be applied to any bodily extension, *e.g.,* a finger or a toe, they are particularly useful for a cosmetic enhancement of fingernails. The present invention may be used in both retail applications (*e.g.*, full-coverage nails) and also in professional applications (*e.g.*, an acrylic method).

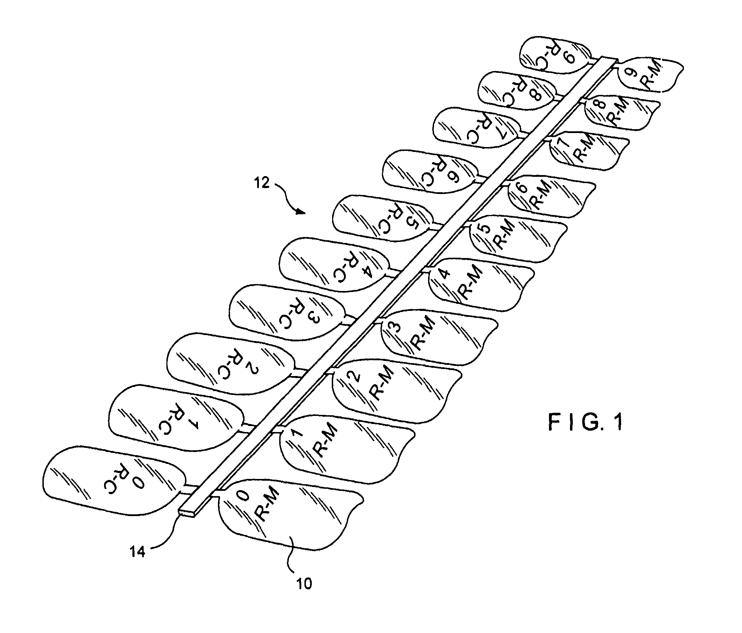

Figure 1 shows an exemplary set of nail sizing elements 12 that may be used in accordance with and are part of an exemplary system of and are part of the present invention. The nail sizing elements 12 may be fabricated by an injection molding to form a unitary part, and can include a plurality of individual elements 10 each including at least one characteristic. For example, an exemplary characteristic of the sizing elements 10 may include a size of the natural nail in terms of lateral and/or longitudinal curvature thereof. Since natural nails vary in both lateral and longitudinal curvatures from one person to another, a plurality of sizing elements 10 (each having a different such curvature) may be used to allow for these variations. In an exemplary embodiment of the present invention, the sizing elements 10 may include lateral curvatures ranging from, *e.g.*, extra flat (EF), flat (F), regular (R), high (H) and extra high (EH). In other exemplary embodiments of the present invention, the sizing elements 10 may include longitudinal curvatures of, *e.g.,* medium (M) and curved (C). In addition, the size of the sizing elements 10 may include size ranges from, *e.g*., #1 (largest) to #15 (smallest), which corresponds to the industry-recognized sizes of nail bodies. Thus, multiple combinations of sizing characteristics may be incorporated to form a plurality of sizing elements 10. For example, an exemplary sizing element may include a "#5" width having a flat lateral curvature, and a medium "M" longitudinal curvature.

In one exemplary embodiment of the present invention, the individual sizing elements 10 may be connected to a supporting structure 14 as shown in Figure 1. Thus, the individual sizing elements 10 may be organized on the supporting structure 14 in an aesthetically pleasing as well as functional pattern. For example, the sizing elements 10 may be arranged in order of size along the supporting structure 14.

The plurality of sizing elements 10 may also include a mark, label or indicator that can be used to distinguish each of the individual sizing elements 10 by at least one characteristic, *e.g.*, size, lateral curvature, longitudinal curvature or combinations thereof. For example, the mark, label or indicator may be molded or etched into the sizing element, and/or other conventional ways for applying the mark/label indicator on the sizing elements 10, as well as another section of the supporting structure 14 may be used.

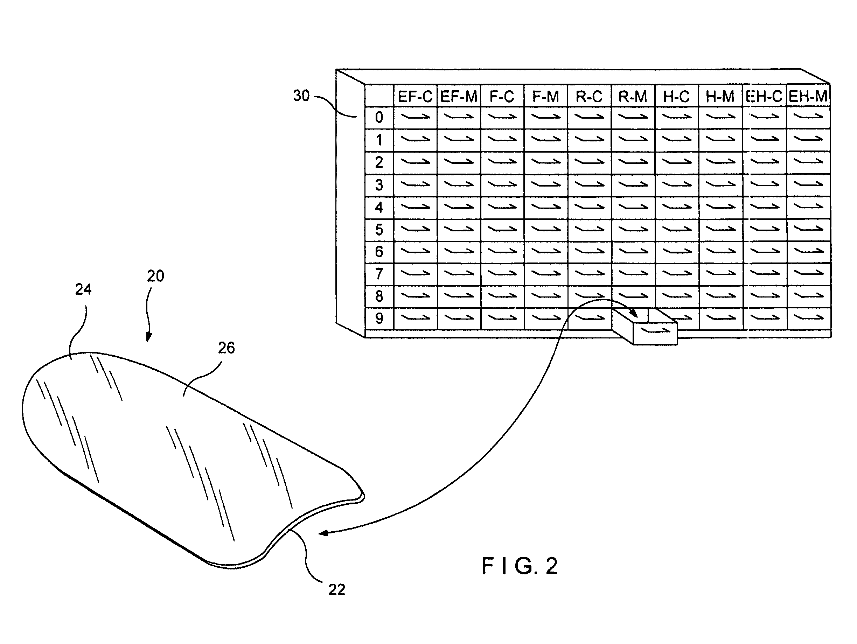

As shown in Figure 2, the exemplary embodiments of these systems and methods according to the present invention further include an artificial nail 20. For example, the artificial nail may include full-coverage nails, which completely overlay the natural fingernail. In addition or alternatively, the artificial nails may include nail tips, which are generally shorter in length as compared to the full-coverage nails, and may be attached to the ends of respective natural nails. The artificial nails of the present invention may also be made from any material known in the art, including but not limited to, tenite acetate, nylon or a blend of ABS plastics.

The exemplary artificial nails 20 according to the present invention may be formed with the same size characteristics as those of the sizing elements 10. For example, one or more of the artificial nails 20 of the present invention may have substantially rectangular shapes with lengths that may be larger than their widths. However, the exemplary artificial nails 20 may also be provided in any shape or size depending on the desired application thereof.

In particular, at least one of the exemplary artificial nails 20 of the present invention may include a distal end 22 and a proximal end 24 that forms the attachment area 12, *e.g.*, the portion that may be attached to the natural nail 36. It should also be understood that the distal end 22 of the artificial nail 20 may also be coupled to the natural nail. Each artificial nail 20 may have a specific thickness depending on its size and/or curvature characteristics. In a further embodiment of the present invention, the artificial nail 20 may taper depending on preferred aesthetics or other factors. For example, the attachment area 26 of the proximal end 24 may be thinner than that of the distal end 22 to allow for a greater flexibility of the artificial nail 20. However, the exemplary artificial nails 20 of the present invention may be provided with any thickness depending on the desired application.

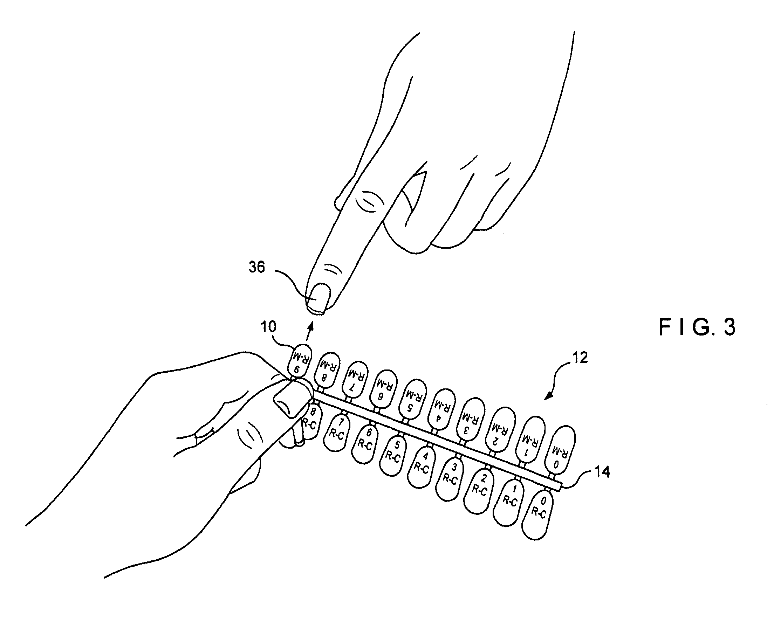

According to further exemplary embodiments of the systems and methods of the present invention, a set of sizing elements 12 may be used to determine the characteristic(s) of a bodily extension, *e.g.,* a toe, finger, etc. For example, as shown in Figure 3, a set of sizing elements 12 may be placed against a natural nail 36 to determine which sizing element 10 corresponds to one or more characteristics of the natural nail 36. To obtain the best match between a sizing element 10 and the natural nail 36, one or more sets of the sizing elements 12 (*e.g*., each include multiple sizing elements 10 with various combinations of sizing characteristics) may be systematically compared to the natural nail 36 so as to obtain the appropriate characteristics of the respective natural nail 36 and/or the artificial nail. In a further embodiment of the present invention, the individual sizing elements 10 may each be labeled or marked so as to identify which characteristics each sizing element 10 includes. For example, the sizing element 10 may include a label "R-M 1" corresponding to a #1 width, and having a regular lateral curvature and a medium longitudinal curvature.

In still a further embodiment of the present invention, a plurality of artificial nails 20 may be provided that can correspond to the sizing characteristics of each of the plurality of sizing elements 10. In addition, the artificial nails 20 may be provided in containers 30 to separate the individual artificial nails 20 according to their particular characteristics that generally correspond to the respective characteristics of the sizing elements 10, as shown in Figure 2. Once the respective sizing element 10 that substantially corresponds to the associated natural nail 36 is located, the artificial nail 20 which has characteristics corresponding to those of the sizing element 10 may be obtained, *e.g.*, from the separate container 30. In a further embodiment of the present invention, the artificial nail 20 that includes substantially the same sizing characteristics as those of the sizing element 10 may then be attached to the natural nail 36.

While there have been described what are believed to be the preferred embodiments of the present invention, those skilled in the art will recognize that other and further changes and modifications may be made thereto without departing from the spirit of the invention, and it is intended to claim all such changes and modifications as all within the true scope of the invention.

## Claims

1. A system for obtaining at least one first characteristic of at least one artificial nail, comprising:
a plurality of nail sizing elements, wherein each of the elements comprises at least one second characteristic, and corresponds to the at least one first characteristic of at least one artificial nail adapted to be attached to a bodily extension.

2. The system of claim 1, wherein the artificial nail comprises a nail tip.

3. The system of claim 1, wherein the artificial nail comprises a full-coverage artificial nail.

4. The system of claim 1, wherein the at least one first characteristic of the at least one artificial nail substantially corresponds to at least one third characteristic of the bodily extension.

5. The system of claim 1, wherein the bodily extension comprises a finger.

6. The system of claim 1, wherein the bodily extension comprises a toe.

7. The system of claim 1, wherein the at least one first characteristic comprises a curvature along the length of the artificial nail.

8. The system of claim 1, wherein the at least one first characteristic comprises a width extending across the artificial nail.

9. The system of claim 1, wherein the at least one first characteristic comprises a length of the artificial nail.

10. The system of claim 1, wherein the at least one artificial nail comprises a molded plastic material.

11. The system of claim 1, wherein the artificial nail is provided separately from the nail sizing elements, and selected based on the at least one second characteristic.

12. A method for obtaining at least one first characteristic of at least one artificial nail, comprising providing a plurality of nail sizing elements, wherein each of the elements comprises at least one second characteristic and corresponds to at least one first characteristic of at least one artificial nail for attachment to a bodily extension.

13. The method of claim 12, wherein the artificial nail comprises a nail tip.

14. The method of claim 12, wherein the artificial nail comprises a full-coverage artificial nail.

15. The method of claim 12, further comprising determining at least one nail sizing element that substantially matches the bodily extension.

16. The method of claim 15 further comprising obtaining at least one artificial nail that corresponds to the at least one nail sizing element and attaching the at least one artificial nail to the bodily extension.

17. The method of claim 13, wherein the at least one first characteristic of the at least one artificial nail substantially corresponds to at least one third characteristic of the bodily extension.

18. The method of claim 12, wherein the bodily extension comprises a finger.

19. The method of claim 12, wherein the bodily extension comprises a toe.

20. The method of claim 12, wherein the at least one first characteristic comprises a curvature along the length of the artificial nail.

21. The method of claim 12, wherein the at least one first characteristic comprises a width extending across the artificial nail.

22. The method of claim 12, wherein the at least one first characteristic comprises a length of the artificial nail.

23. The method of claim 12, wherein the at least one artificial nail comprises a molded plastic material.

24. The method of claim 12, wherein the artificial nail is separate from the nail sizing elements and selected based on the second characteristics.
